# EUROPÄISCHE PATENTANMELDUNG

(11) **EP 2 012 099 A1**
(43) Veröffentlichungstag der Anmeldung: **07.01.2009**
(21) Anmeldenummer: 07111973.9
(22) Anmeldetag: 06.07.2007
(51) Int. Cl.: G01G 21/26

(54) **Kontrollgewicht, Verfahren und System zur Rückverfolgung solcher Gewichte**

(71) Anmelder: Mettler-Toledo AG, 8606 Greifensee (CH)
(72) Erfinder: Haussmann, Holger, CH-8645 Jona (CH); Nater, Roland, CH-8405 Winterthur (CH); von Arx, Patrick, CH-8404 Winterthur (CH); Burkhard, Hans Joerg, CH-8633 Wolfhausen (CH)

(57) **Zusammenfassung**

Ein Kontrollgewicht (1) für die Kontrolle eines gravimetrischen Messinstruments, insbesondere einer Waage, oder zur Kontrolle eines weiteren Gewichts ist mit einer Kennzeichnung versehen. Diese an der Aussenseite des Kontrollgewichts (1) angebrachte Markierung weist einen dauerhaft aufgebrachten maschinenlesbaren Identifizierungscode (2) auf, der das einzelne Gewichtsstück als Individuum wiedererkennbar macht. Damit kann ein Verfahren zur Rückverfolgung eines identifizierbaren Kontrollgewichts (1) durchgeführt werden. Ein System zur Rückverfolgbarkeit von Kontrollgewichten (1) weist ein oder mehrere Lesegeräte (6) zur Erfassung der Markierung, einen oder mehrere Prozessoren (10), in dem der maschinenlesbare Identifizierungscode in einen elektronisch verarbeitbaren ldentifizierungscode rekonvertiert werden kann und eine oder mehrere Speichereinheiten, insbesondere eine Datenbank (8), zur Speicherung von mindestens den im Identifizierungscode enthaltenen Daten auf.

## Beschreibung

Die Erfindung betrifft im Bereich der Metrologie Gewichte zur Kontrolle von Waagen und zur Kontrolle oder Bestimmung anderer Gewichte.

Verschiedene Einflüsse können insbesondere bei sensiblen Waagen, wie Mikro- und Ultramikrowaagen, Analysewaagen oder Präzisionswagen, im Laufe der Zeit zu Messabweichungen führen. Solche Waagen müssen deshalb regelmässig kontrolliert werden, um sicherzustellen, dass sie zutreffende Wägeergebnisse liefern. Zur Bestimmung von Abweichungen dienen Kontrollgewichte mit definierten Gewichtswerten. Für derartige Kontrollgewichte werden nach entsprechenden Normen, z.B. der weltweit gültigen Norm R111 der OIML (Organisation Internationale de Metrologie Légale) Toleranzgrenzen vorgegeben, innerhalb derer sich die tatsächlichen Ist-Gewichtswerte im Verhältnis zum Soll-Gewichtswert (Nominalgewichtswert) befinden dürfen. Dabei werden die Gewichte innerhalb der unterschiedlichen Gewichtsklassen nach unterschiedlichen Präzisionsanforderungen unterteilt. So liegt beispielsweise die Toleranzgrenze für ein 1-mg-Gewicht in der Klasse E1 (höchste Genauigkeitsklasse) bei ± 0,003 mg, während sie in der Klasse M1 (niedrigste Genauigkeitsklasse bei einem 1-mg-Gewicht) ± 0,2 mg beträgt.

Kontrollgewichte im vorliegenden Zusammenhang sind als Gewichte jeglicher Art zu verstehen, die der Kontrolle und/oder Kalibrierung und/oder Eichung von Waagen oder anderer Gewichte dienen. Diese Kontrollgewichte werden gelegentlich auch als "Eichgewichte" oder "Kalibriergewichte" bezeichnet.

Kontrollgewichte können einstückig oder mehrstückig gefertigt sein. Einstückige Kontrollgewichfte werden aus einem Materialblock gefertigt, während mehrstückige Kontrollgewichte innen einen Hohlkörper haben, der so lange mit sogenanntem Justiermaterial gefüllt wird, bis das Sollgewicht erreicht ist, und dann verschlossen wird. Allerdings sind mehrstückige Kontrollgewichte für die höchsten Genauigkeitsklassen gemäss OIML nicht zulässig.

Da sich die tatsächlichen Ist-Gewichtswerte von Kontrollgewichten im Laufe der Zeit durch Abnutzung verändern, könnten in der Folge, wenn diese Kontrollgewichte zur Kontrolle von Waagen verwendet werden, auch Wägeergebnisse oder industrielle Prozesse ihre Toleranzwerte überschreiten. Deshalb muss sichergestellt werden, dass die jeweils vorgegebene Toleranzgrenze der Kontrollgewichte eingehalten wird. Hierzu werden Kontrollgewichte selbst einer regelmässigen Kontrolle mit entsprechenden anderen Kontrollgewichten, sogenannten Check-Standards, unterzogen. Die Zeitintervalle für derartige Kontrollen ergeben sich aus der jeweiligen Genauigkeitsklasse der Gewichte bzw. aus dem Einsatzgebiet und den Einsatzbedingungen.

Für jedes einzelne Kontrollgewicht wird auf Verlangen ein Zertifikat ausgestellt, in dem sein Ist-Gewicht zum betreffenden Zeitpunkt, sein Nominalgewicht, seine Genauigkeitsklasse in Bezug auf eine vorgegebene Klassengrenze sowie eine Kalibrier-Identifikationsnummer und die Zertifikatsnummer aufgeführt wird. Bei einem später erfolgenden Kontrollvorgang, einer sogenannten Rekalibrierung, wird jeweils ein neues Zertifikat ausgestellt, wobei eine neue Zertifikatsnummer dem gleichen Gewicht zugeordnet wird, die Katibrier-Identifikationsnummer jedoch dem Gewicht zugeordnet bleibt.

Die Kontrollgewichte bzw. die entsprechenden Gewichtssätze mit Kontrollgewichten unterschiedlicher Gewichtswerte werden für den Vertrieb und die Lagerung bei der späteren Verwendung durch die Anwender in speziellen Gewichtsbehältnissen gelagert. Dabei sind für jeden Gewichtswert entsprechend bemessene Aussparungen in einem solchen Behältnis vorgesehen, so dass beispielsweise ein 100-g-Gewicht exakt nur in die Aussparung für 100-g-Gewichte passt, aber nicht in eine Aussparung für ein 50-g-Gewicht, während die Aussparung für ein 200-g-Gewicht nicht vollständig ausgefüllt werden würde, so dass die grössenmässige Zuordnung der Gewichtsstücke möglich ist. Die Zertifikate der einzelnen Gewichtsstücke sind diesen Behältnissen beigefügt, so dass der Zusammenhang zwischen Zertifikat und Kontrollgewichtsstück prinzipiell gegeben ist. Dies erfolgt in der Regel vermittels eines auf dem Behältnis angebrachten Etiketts, auf dem die Kalibrierldentifikationsnummer aufgedruckt ist, und eines weiteren Etiketts, auf dem die Zertifikatsnummer aufgedruckt ist.

Durch die manuelle Handhabung der Kontrollgewichte bei deren Benutzung ist es jedoch leicht möglich, dass der Zusammenhang zwischen dem Gewichtsstück und seinem dazugehörigen Zertifikat bzw. seiner Kalibrier-Identifikationsnummer verlorengeht. Dies kann zum Beispiel dann geschehen, wenn eine Waage beispielsweise auf 400 g geeicht bzw. kalibriert werden soll und hierfür-weil kein 400-g-Gewichtsstück vorhanden ist - statt dessen ein 200-g-Gewichtsstück und zwei 100-g-Gewichtsstücke verwendet werden. Unabhängig davon, ob die zwei 100-g-Gewichtsstücke in demselben Behältnis aufbewahrt waren oder aus zwei verschiedenen Behältnissen stammen, kann es dabei zu Handhabungsfehlern und damit zu einem Vertauschen der zwei 100-g-Gewichtsstücke kommen. Die falsche Zuordnung von Zertifikat zu Gewichtsstück ist die Folge, die nicht einmal wirksam überprüft werden kann, so dass ein solcher Fehler unentdeckt bleibt.

Problematisch bei dieser Methode ist, dass es keine eindeutige Zuordnung von Zertifikat zum Kontrollgewicht, also zum Gewichtsstück selbst gibt. Daher ist die Handhabung solcher Kontrollgewichte mit der grösstmöglichen Sorgfaltspflicht verbunden, um die Zuordnung zwischen Zertifikat und kalibriertem Gewichtsstück dauerhaft sicherzustellen. Und dennoch ist keine Sicherheit gegeben, dass dies erreicht wird. Unbeabsichtigte Vertauschungen sind weder ausgeschlossen noch zuverlässig nachträglich feststellbar.

Aus der DE 40 06 375 A1 ist bekannt, Kontrollgewichte mit einer ihren Gewichtswert kennzeichnenden Codierung auszustatten. Dies erfolgt mittels elektronischer Speicherung des Gewichtswerts innerhalb einer Gewichtselektronik, die im Gewichtsstück selbst enthalten ist. Dies hat den Nachteil, dass elektrische Kontakte zur Übermittlung dieser Daten vom Gewichtsstück an die Waage und auch zurück erforderlich sind, die eine definierte Gewichtspositionierung und insbesondere besondere Vorrichtungen erfordern, die die Herstellung und Verwendung fehleranfällig machen. Auch ist eine elektronische Speicherung nicht völlig fehlerresistent, so dass Datenfehler durch Fehlbehandlung der Kontrollgewichte oder auch durch Materialermüdung und somit daraus resultierende Eichfehler auch hier nicht völlig ausgeschlossen werden können. Auch ist die Herstellung solcher Kontrollgewichte aufwändig.

Da die Kennzeichnung nur den anfänglichen Ist-Gewichtswert enthält, ist durch diese Codierung keine individuelle Identifikation jedes einzelnen Gewichtsstücks gegeben, sondern nur eine Klassifizierung nach dem Gewichtswert. Die Rückverfolgung eines individuellen Gewichtsstücks nach dem beschriebenen Verfahren ist nur insofern möglich, als die höchstmögliche Anzahl durchführbarer Kontrollvorgänge im elektronischen Gewichtsspeicher aufgenommen ist und jeder Kontrollvorgang gezählt wird, bis diese Obergrenze erreicht ist. Rückverfolgungen über diesen Rahmen hinaus oder bezüglich anderer Vorgänge, z.B. bezüglich Herstellungsort, -datum, -serie usw. sind nicht möglich. Eine Rückrufaktion, die z.B. bei einem Produktionsfehler einer Serie erforderlich sein könnte, ist bei solchermassen gekennzeichneten Kontrollgewichten daher nicht möglich.

Aufgabe der Erfindung ist es daher, ein Kontrollgewicht derart auszugestalten, dass es dauerhaft individuell rückverfolgbar ist.

Dies wird dadurch erreicht, dass das Kontrollgewicht selbst eine Kennzeichnung beziehungsweise Markierung durch einen maschinenlesbaren Identifizierungscode an seiner Aussenseite aufweist, der das einzelne Gewichtsstück als Individuum wiedererkennbar macht.

Dies hat den Vorteil, dass derartige Kontrollgewichte dauerhaft und zuverlässig ihren Zertifikaten zugeordnet werden können und sämtliche Informationen maschinell erfasst sowie verarbeitet und ggf. zentral gespeichert werden können. Verwechslungen im Rahmen von Handhabungen können somit weitgehend vermieden werden, beziehungsweise nachträglich zuverlässig festgestellt werden. Ferner sind bespielweise im Fall von nach OIML in die Stufe "E" einklassierten Kontrollgewichten Umklassifizierungen in eine andere Genauigkeitsklasse bei festgestelltem Überschreiten der Toleranzgrenze problemlos möglich.

Eine solche Kennzeichnung ist sowohl für einstückige als auch für mehrstückige Kontrollgewichte vorteilhaft.

Das Anbringen des Identifzierungscodes an der Aussenseite des Gewichtsstücks hat den Vorteil, dass das Anbringen und die Lesbarkeit des ldentifizierungscodes auf einfache Weise gewährleistet ist.

Vorteilhafte Ausgestaltungen sehen vor, den Identifizierungscode in Form eines Data-Matrix-Code s oder in Form eines miniaturisierten Barcodes auszubilden.

Bevorzugt ist, dass der Identifizierungscode eine eindeutig dem Gewichtsstück zugeordnete Gewichtsnummer aufweist.

Sinnvolle Weiterbildungen sehen vor, dass der Identifizierungscode weitere Informationen über das betreffende Gewichtsstück enthält. Diese können beispielsweise dessen Fertigungslos-Nummer und Datumsangaben, insbesondere das Produktionsdatum, das Datum der Markierung und/oder das Datum der Erstkalibrierung umfassen. Dies hat den Vorteil, dass gegebenenfalls auch ohne Zugriff auf externe Datenbanken oder Datenvorhaltung auf eigenen Speichermedien Informationen im Kontrollverfahren zur Verfügung stehen und somit solche Prozesse vereinfacht und beschleunigt werden.

Aufgabe der Erfindung ist ferner, ein Verfahren bereitzustellen, mit dem solche Kontrollgewichte rückverfolgbar sind. Dies wird dadurch erreicht, dass
1) ein Identifizierungscode gebildet wird
2) dieser Identifizierungscode in eine maschinenlesbare Codeform konvertiert wird und
3) die maschinenlesbare Codeform als Markierung oder Kennzeichnung auf dem Gewichtsstück aufgebracht wird.

Der Identifizierungscode umfasst im Wesentlichen eine eindeutig dem Kontrollgewicht zugeordnete Gewichtsnummer. Aber auch beliebige andere Zusammensetzungen des Identifizierungscodes sind denkbar. Wesentlich ist nur, dass der gebildete Identifizierungscode dazu geeignet ist, in den vorgesehenen auf das Gewichtsstück als Markierung aufzubringenden maschinenlesbaren Identifizierungscode konvertiert zu werden. Dieses Verfahren kann unmittelbar im Anschluss an die Herstellung der Kontrollgewichte oder auch zu einem späteren Zeitpunkt ausgeführt werden. Die Durchführung im Rahmen der Herstellung hat den Vorteil, dass jedes einzelne Gewichtsstück bereits ab dem Ende der Herstellung identifizierbar und damit rückverfolgbar ist. Die nachträgliche Durchführung hat den Vorteil, dass bereits in Benutzung befindliche Kontrollgewichte, insbesondere solche, deren Zuordnung zu ihrem Zertifikat verlorengegangen ist, nachträglich identifizierbar und damit erneut rückverfolgbar werden.

Sinnvolle Ausgestaltungen der Konvertierung sehen vor, den Identifizierungscode in einen Matrix-Code oder einen Miniatur-Barcode umzuwandeln,

Eine vorteilhafte Ausführungsform des Markierungsverfahrens sieht vor, dass die Markierung mit Hilfe eines Lasers erfolgt. Dies hat den Vorteil, dass die Markierung ohne oder allenfalls unter minimalem Materialverlust ausgeführt werden kann und gleichzeitig dauerhaft am Gewichtsstück angebracht ist. Lasermarkierungsverfahren können ein einen Identifizierungscode enthaltendes Muster mittels Mattierung oder mittels der Methode der sogenannten Anlassfarben erzeugen.

Weitere gut geeignete Schreibverfahren für das Aufbringen einer Markierung sind beispielsweise Pinmarkieren, Ätzen oder Elektronenstrahlschreiben. Aber auch andere, hier nicht aufgeführte Methoden sind denkbar.

Eine vorteilhafte Weiterbildung des Verfahrens sieht vor, nach der Markierung des Kontrollgewichts den zugrundeliegenden Identifizierungscode in einer Datenbank dauerhaft abzulegen. Dies hat den Vorteil, dass eine systematische Ver- und Bearbeitung der erfassten Identifizierungscodes und der Daten der damit codierten Gewichtsstücke ermöglicht wird. Vorteilhafterweise werden auch die Zertifikatsdaten nach ihrer Erfassung zusammen mit dem Identifizierungscode in der Datenbank abgelegt. So können Zertifikatsdaten einzelner individueller Kontrollgewichte automatisch und damit auf einfache, zuverlässige Weise bereitgehalten und an anfordernde Stellen übermittelt werden.

Wird zu einem Kontrollgewicht ein Zertifikat erstellt, so wird auf diesem eindeutig auf den Identifizierungscode referenziert. Insbesondere, wenn der Identifizierungscode eine eindeutig dem Gewicht zugeordnete Gewichtsnummer umfasst, so findet sich diese auf dem Zertifikat wieder.

Da in einem Kontroll- bzw. Kalibrier- oder Rekalibrierverfahren auch ein weiteres Kontrollgewicht gegenüber einem ersten Kontrollgewicht, insbesondere gegenüber einem Check-Standard, verglichen werden kann, ist es von Vorteil, wenn der Identifizierungscode des ersten Kontrollgewichts, insbesondere des Checkstandards ebenfalls in die Datenbank aufgenommen wird und gegebenenfalls auf dem Zertifikat ausgewiesen wird. Auf diese Weise ist in hohem Masse eine Rückverfolgung möglich.

Die Zertifikatsdaten umfassen ferner die Kaübrier-ldentifikationsnummer, die Zertifikatsnummer, das Datum der Zertifikatserstellung, Form und Material des Kontrollgewichts, die Identität der die Kontrollwägung ausführenden Person, die Wägebedingungen, die Umgebungsbedingungen, wie Temperatur und Luftdruck, den aktuellen Wägewert, sowie statistische Grössen die Kontrollwägung betreffend.

Da die Gewichtsstücke von Zeit zu Zeit rekalibriert werden ist es bevorzugt, durch die zeitliche Abfolge von Zertifikatsdaten ein Historienfile für das betreffende Gewicht in der Datenbank zu erstellen. Damit können erfasste und/oder gespeicherte Daten mit jenen eines vorgängigen Zertifikats verglichen und die Ergebnisse weiter verarbeitet werden und gegebenenfalls aus den Ergebnissen Prognosen über die weitere Verwendbarkeit der Gewichte erstellt werden.

Aufgabe der Erfindung ist ferner, ein System zu schaffen, mit dem Kontrollgewichte individuell und dauerhaft rückverfolgbar sind. Dies wird mit den Merkmalen des Anspruchs 17 sowie den Ausgestaltungen der darauf rückbezogenen Ansprüche erreicht. Diese Ausgestaltungen haben den Vorteil, dass eine systematische Verwaltung aller individuell gekennzeichneter Gewichtsstücke, insbesondere zentral möglich ist und jederzeit ein Zugriff auf sämtliche Daten zum jeweiligen individuellen Gewichtsstück erfolgen kann. Der oder die Prozessoren können den gelesenen Markierungcode in den zugrundeliegenden Identifizierungscode zurückkonvertieren und dann unmittelbar verwenden. Die mindestens eine Speichereinheit dient dazu, den Identifizierungscode und vorteilhafterweise auch weitere erfasste Daten (z.B. auch die Zertifikatsdaten) zu dem betreffenden Gewichtsstück dauerhaft und wiederabrufbar zu speichern. Solche Daten werden idealerweise in einer Datenbank bereitgehalten, die eine zentrale Verfügbarkeit und schnelle systematische Auswertbarkeit ermöglicht. Damit ist für das jeweilige Gewichtsstück die Grundlage für die Rückverfolgbarkeit gegeben, die im Verlaufe der Lebensdauer eines Kontrollgewichts z.B. Rückschlüsse über die bisherige Abnutzung und damit auch Prognosen für die Zukunft erlaubt. Dies kann beispielsweise eine Empfehlung über ein verändertes Rekalibrierungsintervall betreffen, oder auch eine Reklassifizierung, wenn ein Kontrollgewicht seine Toleranzgrenze überschritten hat. Damit ist grösstmögliche Qualität in der Überwachung von KontroNgewichten gegeben, was die Zuverlässigkeit der mit solchen Kontrollgewichten kontrollierten Waagen bzw. Gewichten erhöht.

Eine weitere vorteilhafte Ausgestaltung des Systems sieht vor, den mindestens einen Prozessor so auszustatten, dass er auf der Basis der ermittelten Ergebnisse und/oder Prognosen Nachrichten versenden kann, wie beispielsweise eine Mitteilung über den Ablauf einer Kontrollfrist. Dies hat den Vorteil, dass die Überwachung der Kontrollgewichte und ihrer Messungen systematisch und zuverlässig zentral, z.B. durch den Hersteller, gesteuert werden kann. Damit ist sichergestellt, dass die Verwender der Konrtrollgewichte unmittelbar und zuverlässig über erforderliche Massnahmen informiert werden können, was die Qualität der betroffenen Messsysteme erhöht.

Im Folgenden ist die Erfindung anhand der Zeichnung näher erläutert. Es zeigen:
- Fig. 1: ein beispielhaftes Kontrollgewicht in Seitenansicht,
- Fig. 2: ein erfindungsgemässes, beispielhaftes Kontrollgewicht in Draufsicht mit schematischer Darstellung des in Form einer Markierung aufgebrachten maschinenlesbaren Identifizierungscodes,
- Fig. 3: eine vergrösserte Darstellung einer aufgebrachten Markierung in Form einer Matrix und
- Fig. 4: eine schematische Darstellung eines Systems für die Rückverfolgbarkeit eines Kontrollgewichts

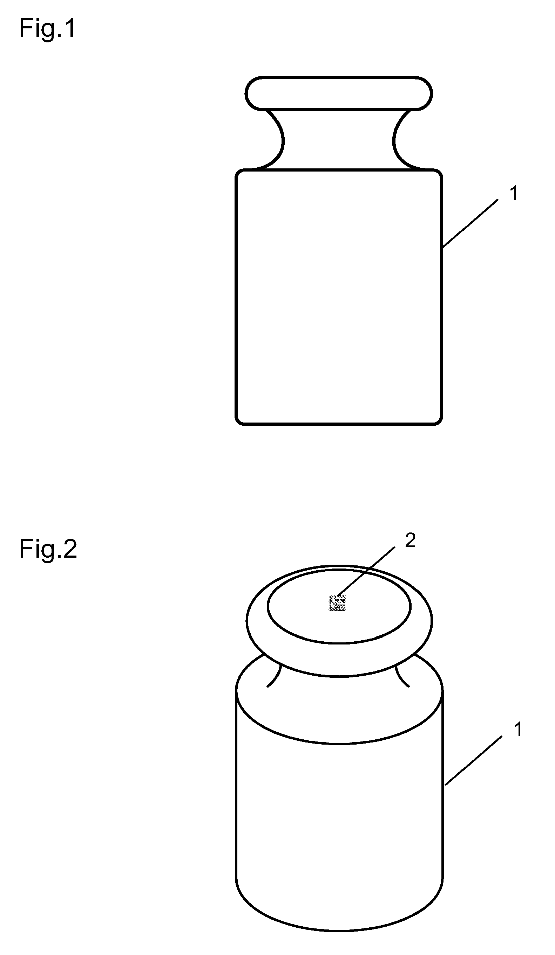

Figur 1 zeigt beispielhaft ein Kontrollgewicht 1. Selbstverständlich können die Proportionen solcher Kontrollgewichte 1 variieren oder die Gewichte 1 völlig anders geformt sein, insbesondere im Zusammenhang mit ihrem Nominalgewicht. So sind beispielsweise Gewichte der niedrigsten Gewichtswerte üblicherweise als sogenannte Drahtgewichte oder Plättchengewichte ausgestaltet.

Figur 2 zeigt ein erfindungsgemässes Kontrollgewicht 1 entsprechend der beispielhaften Darstellung in Figur 1 mit Markierung, die einen einen Identifizierungscode enthaltenden Matrix-Code 2 umfasst. Die Form und die Grösse des Matrix-Codes 2 ist nicht massstabgetreu. Je nach verwendeter Markierung können deren Form und Grösse variieren. Im Falle der genaueren Gewichts-Klassierungsstufen E und F ist jedoch die maximale Grösse vorgegeben. Auch kann die Anordnung auf dem Gewichtsstück variieren. Vorteilhafterweise ist sie oben angebracht, da sie dann auf einfache Weise lesbar ist. Andere Positionen sind jedoch genauso denkbar, wie seitlich oder an der Unterseite.

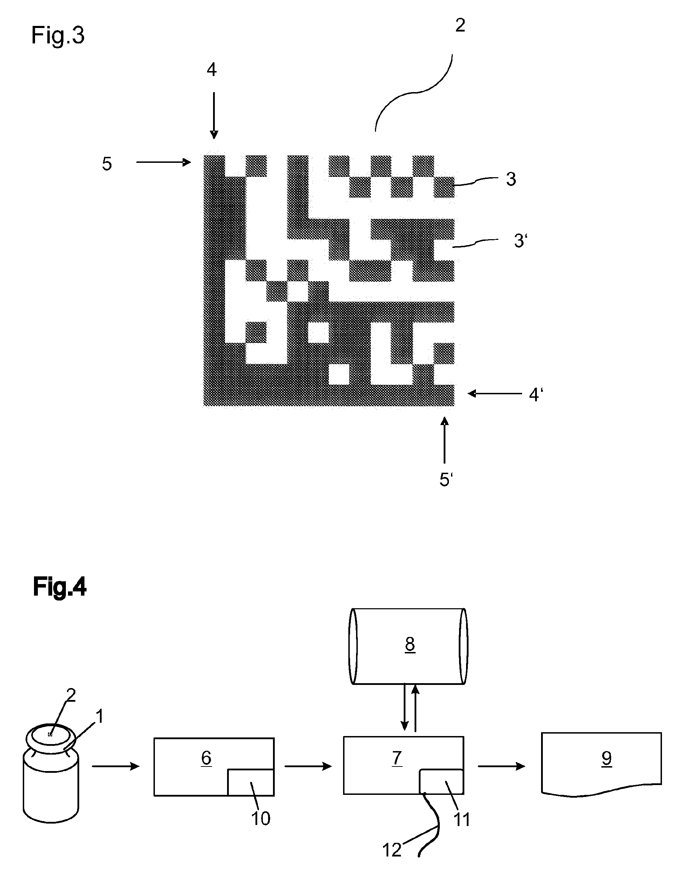

Figur 3 zeigt beispielhaft die Ausgestaltung einer solchen Markierung 2 in Form einer Matrix 2. Diese weist beispielhaft zwölf x zwölf Datenzellen 3, 3' auf, wobei die zwei verschiedenen Werte hier durch Darstellung als schwarze Datenzelle 3 und als weisse Datenzelle 3' beispielhaft dargestellt sind. Dabei bilden jeweils zwei über Eck zusammenhängende Datenzellenreihen 4, 4' und 5, 5' ein Muster, das dem Lesegerät ermöglicht, den Matrix-Code aufzufinden und in der richtigen Ausrichtung zu lesen bzw. zu interpretieren. Die zwei in Pfeilrichtung 4 und 4' verlaufenden Reihen von Datenzellen mit einheitlichen Werten (schwarz) stellen das Erkennungsmuster dar, die jeweils gegenüberliegenden Datenzellenreichen in Pfeilrichtung 5, 5' mit alternierenden Werten das Orientierungsmuster. Dabei dienen die Datenzellenreihen des Erkennungsmusters 4, 4' dazu, den Matrix-Code auf dem Gewicht aufzufinden und die Datenzellenmuster des gegenüberliegenden Orientierungsmusters 5, 5' zur richtigen Orientierung beim Lesen des Codes bzw. bei seiner Auswertung. Die von diesen Datenzellenreihen 4, 4' und 5, 5' eingeschlossenen Datenzellen stellen den eigentlichen Identifizierungscode dar.

Die Erzielung der dualen Wertepaare bei der Herstellung kann beispielsweise durch Mattierung einer glatten Oberfläche für die schwarz dargestellten Datenzellen 3 realisiert werden. Auch andere dual darstellbare Techniken können verwendet werden. Als Beispiel seien hier genannt das Erzeugen von Vertiefungen, wie etwa durch Pinmarkieren oder eine Farbänderung mittels Laser über sogenannte Anlassfarben oder alternativ durch Ätzen.

Figur 4 zeigt eine schematische Übersicht über ein System zur Rückverfolgbarkeit eines erfindungsgemäss hergestellten Kontrollgewichts 1. Das Lesegerät 6, welches mit einem Prozessor 10 ausgestattet ist, liest die aufgebrachte Markierung, hier den Matrix-Code 2. Der Prozessor 10 konvertiert diesen in einen Identifizierungscode und übermittelt diesen an einen ebenfalls mit einem oder mehreren Prozessoren ausgestatteten Rechner 7. Der Rechner 7 ist mit einer Datenbank 8 verbunden, welche alle erforderlichen Daten zur Erstellung eines Zertifikats 9 enthält. Mit Hilfe des ldentifizierungscodes kann nun der Rechner 7 die benötigten Daten von der Datenbank 8 beziehen und ein Zertifikat 9 erstellen.

Dass jeder Identifizierungscode nur genau einmal vergeben wird, ist dadurch sichergestellt, dass die die Markierung, d.h. die den Matrix-Code 2, erzeugende Schreibvorrichtung (hier nicht gezeigt), welche beispielsweise einen Laser umfasst, mit entsprechenden Softwaremodulen ausgestattet ist.

Die Datenbank 8 ist dazu geeignet, weitere Daten zum gespeicherten Identifizierungscode aufzunehmen, insbesondere Daten, die für die Zertifizierung erforderlich sind, aber auch solche, die erst später, z.B. im Rahmen von Rekalibrierungsvorgängen entstehen.

Ferner können Mittel vorgesehen sein, die eine Fehlerüberprüfung des eingelesenen Matrix-Code s 2 ermöglichen.

Über die Datenverbindung 12, die hier nur angedeutet ist, können vom Prozessor 11 des Rechners 7 Daten an andere Prozessoren und/oder Rechner (nicht dargestellt) übermittelt oder von diesen empfangen werden, Diese Prozessoren können in unmittelbarer Direktverbindung mit dem Prozessor 11 stehen, sie können jedoch auch Bestandteil des Intranets sein oder im Rahmen des Internets erreichbar sein. Solche Rechner können beispielsweise beim Kunden oder bei anderen akkreditierten Messlabors stehen, denen dann die Zertifikatsdaten übermittelt werden können. Über die Datenverbindung 12 ist der mit dem Lesegerät 6 eingelesene Identifizierungscode direkt, d.h. ohne Speicherung auf der Datenbank 8, an einen entfernt stehenden Prozessor (nicht abgebildet) übermittelbar. Über eine weitere Datenverbindung , beispielsweise zu einer Kontrollwaage (nicht dargestellt) sind ferner Daten von dieser Kontrollewaage, z.B. ermittelte Gewichtsdaten, an den Prozessor 11 des Rechners 7 oder Daten vom Rechner 7, z.B. Zertifikatsdaten, an diese Kontrollwaage (nicht dargestellt) übermittelbar. Weitere Ausgestaltungen sind denkbar.

Die Figuren stellen nur eine schematische Darstellung von beispielhaften Ausführungsformen dar. Andere Arten von Markierungen sind ebenso vorstellbar wie andere Anordnungen der Markierungen auf den einzelnen Gewichtsstücken. Auch ist es möglich, beliebig andere Informationen in den Code aufzunehmen, um damit die zentrale Rückverfolgbarkeit umfassender auszugestalten.

## Patentansprüche

1. Kontrollgewicht (1) für ein gravimetrisches Messinstrument, insbesondere für eine Waage, mit einer Kennzeichnung, **dadurch gekennzeichnet, dass** es an seiner Aussenseite einen dauerhaft aufgebrachten maschinenlesbaren Identifizierungscode aufweist, der das einzelne Gewichtsstück als Individuum wiedererkennbar macht.

2. Kontrollgewicht (1) nach Anspruch 1, **dadurch gekennzeichnet, dass** der maschinenlesbare Identifizierungscode als Matrix-Code (2) ausgebildet ist.

3. Kontrollgewicht (1) nach Anspruch 1, **dadurch gekennzeichnet, dass** der maschinenlesbare Identifizierungscode als miniaturisierter Barcode ausgebildet ist.

4. Kontrollgewicht (1) nach einem der Ansprüche 1 bis 3 **dadurch gekennzeichnet, dass** der Identifizierungscode eine eindeutig dem Gewichtsstück zugeordnete Gewichtsnummer aufweist.

5. Kontrollgewicht (1) nach Anspruch 4, **dadurch gekennzeichnet, dass** der Identifizierungscode weitere Informationen über das individuelle Gewichtstück, insbesondere dessen Fertigungslos-Nummer und Datumsangaben, insbesondere das Produktionsdatum, das Datum der Markierung und/oder das Datum der Erstkalibrierung enthält.

6. Verfahren zur Rückverfolgung eines identifizierbaren Gewichts (1) nach einem der Ansprüche 1 bis 5 **dadurch gekennzeichnet, dass**
- ein Identifizierungscode gebildet wird, der das einzelne Gewichtsstück als Individuum wiedererkennbar macht,
- dieser Identifizierungscode in eine maschinenlesbare Codeform konvertiert wird, und
- die maschinenlesbare Codeform als Markierung auf dem Gewichtsstück (1) aufgebracht wird.

7. Verfahren nach Anspruch 6, **dadurch gekennzeichnet, dass** die Konvertierung in einen Matrix-Code (2) oder in einen Miniatur-Barcode erfolgt.

8. Verfahren nach Anspruch 6 oder 7, **dadurch gekennzeichnet, dass** das Aufbringen der Markierung mittels Laserstrahl, Pinmarkieren, Ätzen oder Elektronenstrahlschreiben erfolgt.

9. Verfahren nach einem der Ansprüche 6 bis 8, **dadurch gekennzeichnet, dass** der Identifizierungscode in eine Datenbank (8) aufgenommen wird.

10. Verfahren nach einem der Ansprüche 6 bis 9, **dadurch gekennzeichnet, dass** zu einem Kontrollgewicht (1) ein Zertifikat (9) erstellt wird, welches auf den Identifizierungscode Bezug nimmt.

11. Verfahren nach einem der Ansprüche 9 oder 10, **dadurch gekennzeichnet, dass** ein weiteres Kontrollgewicht gegenüber einem ersten Kontrollgewicht, insbesondere gegenüber einem Check-Standard, kalibriert oder rekalibriert wird, und dass der Identifizierungscode des ersten Kontrollgewichts, insbesondere des Checkstandards ebenfalls in die Datenbank (8) aufgenommen wird und insbesondere auf dem Zertifikat (9) ausgewiesen wird.

12. Verfahren nach Anspruch 10 oder 11, **dadurch gekennzeichnet, dass** zu jedem Kontrollgewicht Zertifikatsdaten erstellt werden und dass die Zertifikatsdaten in die Datenbank (8) aufgenommen werden und der Identifizierungscode diesen in der Datenbank (8) eindeutig zugeordnet wird.

13. Verfahren nach Anspruch 12, **dadurch gekennzeichnet, dass** die Zertifikatsdaten die Zertifikatsnummer, die Kalibrier-Identifikationsnummer, das Datum der Zertifikatserstellung, Form und Material des Kontrollgewichts, die Identität der die Kontrollwägung ausführende Person, die Wägebedingungen, die Umgebungsbedingungen, wie Temperatur und Luftdruck, den aktuellen Wägewert, sowie statistische Grössen die Kontrollwägung betreffend umfassen.

14. Verfahren nach Anspruch 12 oder 13, **dadurch gekennzeichnet, dass** das Kontrollgewicht (1) von Zeit zu Zeit rekalibriert wird, wobei vorzugsweise ein neues Zertifikat (9) erstellt wird und dem Kontrollgewicht (1) zugeordnet wird, und dass durch die zeitliche Abfolge von Zertifikatsdaten ein Historienfile für das betreffende Kontrollgewicht (1) in der Datenbank (8) erstellt wird.

15. Verfahren nach Anspruch 14, **dadurch gekennzeichnet, dass** erfasste und/oder gespeicherte Daten mit jenen eines vorgängigen Zertifikats (9) verglichen und die Ergebnisse weiter verarbeitet werden.

16. Verfahren nach Anspruch 15, **dadurch gekennzeichnet, dass** aus den Ergebnissen Prognosen über die weitere Verwendbarkeit des Kontrollgewichts (1) erstellt werden.

17. Verfahren nach einem der Ansprüche 11 bis 16, **dadurch gekennzeichnet, dass** Zertifikatsdaten oder weitere informationen übermittelt werden, insbesondere dass eine Erinnerung für das Nahen des Zeitpunkts einer erneuten Rekalibrierung übermittelt wird.

18. System zur Rückverfolgbarkeit von Kontrollgewichten (1) nach einem der Ansprüche 1 bis 5 enthaltend
a) mindestens ein Kontrollgewicht (1) mit einem in Form einer Markierung aufgebrachten, maschinenlesbaren Identifzierungscode,
b) ein oder mehrere Lesegeräte (6) zur Erfassung der Markierung,
c) einen oder mehrere Prozessoren (10), in dem der maschinenlesbare Identifizierungscode in einen elektronisch verarbeitbaren Identifizierungscode rekonvertiert werden kann,
d) eine oder mehrere Speichereinheiten, insbesondere eine Datenbank (8), zur Speicherung von mindestens den im Identifizierungscode enthaltenen Daten.

19. System nach Anspruch 18, **dadurch gekennzeichnet, dass** vermittels des mindestens einen Prozessors (10, 11) zusätzlich zu dem Identifizierungscode weitere Daten des Kontrollgewichts (1) erfassbar und in den Speichereinheiten, insbesondere der Datenbank (8), speicherbar sind.

20. System nach Anspruch 18 oder 19, **dadurch gekennzeichnet, dass** ein Rechner (7) zur Erstellung von Zertifikaten (9) vorhanden ist.

21. System nach Anspruch 18, 19 oder 20, **dadurch gekennzeichnet, dass** die Datenbank (8) Zertifikatsdaten enthält, insbesondere die Zertifikatsnummer, die Kalibrier-Identifikationsnummer, das Datum der Zertifikatserstellung, Form und Material des Kontrollgewichts (1), die Identität der die Kontrollwägung ausführende Person, die Wägebedingungen, die Umgebungsbedingungen, wie Temperatur und Luftdruck, den aktuellen Wägewert, sowie statistische Grössen die Kontrollwägung betreffend.

22. System nach einem der Ansprüche 18 bis 21, **dadurch gekennzeichnet, dass** eine Kommunikationsvorrichtung (12) vorhanden ist, mit welcher aufgrund der Ergebnisse und/oder Prognosen Nachrichten über Verbindungen an andere Prozessoren und/oder Rechner übermittelt werden können.
